# EUROPÄISCHE PATENTSCHRIFT

(11) **EP 4 527 727 B1**
(45) Veröffentlichungstag und Bekanntmachung des Hinweises auf die Patenterteilung: **05.11.2025**
(21) Anmeldenummer: 23198426.1
(22) Anmeldetag: 20.09.2023
(51) Int. Cl.: B62K 27/00, B62K 3/00, B62K 7/00, B62K 5/02

(54) **MODULARES LASTENFAHRZEUG**
MODULAR TRUCK
VÉHICULE DE TRANSPORT MODULAIRE

(43) Veröffentlichungstag der Anmeldung: 26.03.2025
(73) Patentinhaber: MAGNA Automotive Europe GmbH, 1120 Wien (AT)
(72) Erfinder: BECIRBASIC, Mehmed, 4441 Behamberg (AT); SCHIMATZEK, Uwe, 4053 Ansfelden (AT); SCHLAGER, Gerd, 4292 Kefermarkt (AT)
(74) Vertreter: Zangger, Bernd

(56) Entgegenhaltungen:
- AT-B- 140 288
- CH-A2- 712 352
- DE-B- 1 140 479
- FR-A1- 3 085 938
- JP-A- 2013 006 457
- US-A1- 2023 278 481

## Beschreibung

### Gebiet der Erfindung

Die vorliegende Erfindung betrifft ein modulares Lastenfahrzeug, zum Transport von Lasten durch einen Fahrer.

### Stand der Technik

Es ist bekannt, dass mit einem Fahrrad, beispielsweise mit zwei oder mit drei Rädern (Trike), Lasten auf einem Gepäckträger transportiert werden können. Das Fahrrad kann über eine Tretkurbel durch einen Fahrer angetrieben werden. Zusätzlich oder alternativ kann ein Fahrrad über einen elektrischen Antriebsmotor angetrieben werden. Zum Transport größerer Lasten kann auch ein Anhänger an ein Fahrrad angekoppelt werden.

Bekannt sind auch Roller, also sog. "Scooter", bei welchen der Fahrer im Wesentlichen aufrecht auf dem Roller steht und ohne Tretkurbel, durch Antauchen mit dem Fuß auf dem Boden, das Fahrzeug antreibt. Auf solchen Rollern können üblicherweise keine größeren Lasten transportiert werden.

Zum Transport von größeren Lasten werden üblicherweise Kraftfahrzeuge verwendet. Diese benötigen aber, abgesehen von der höheren Antriebsenergie, auch breitere Zufahrtswege als Fahrräder als Roller.

Insbesondere zur Auslieferung unterschiedlichster Waren durch einen Lieferdienst wäre, je nach Größe und Menge der Waren, der Einsatz verschiedener Transportfahrzeuge besonders effizient und wirtschaftlich. Dazu müsste jedoch ein größerer Fuhrpark mit entsprechenden Parkmöglichkeiten bereitgestellt werden. Ein guter Teil der Fahrzeuge wurde dann zu jedem Zeitpunkt unbenutzt verbleiben.

Aus der gattungsgemäßen DE 11 40 479 B ist ein Hebelroller bekannt, zum Bewegen und Lenken eines fahrbaren Transportbehälters, der den Behälter auf der Standseite bodenfrei anhebt und ihn, als Drehschemel wirkend, lenkt und bewegt, wobei der Hebelroller in an sich bekannter Weise mit einer Treteinrichtung, einer Kette und einem Sattel ausgerüstet ist.

Die US 2023/278481 A1 offenbart ein Doppelzweck-Wohnmobil, das von einem Fahrrad und von Hand gezogen werden kann, mit Fahrzeugrahmen und einem Fahrradträger, wobei eine Zugstange drehbar zwischen den beiden Fahrzeugrahmen verbunden ist; eine vordere Halterung und eine hintere Halterung drehbar zwischen dem vorderen Ende und dem hinteren Ende einer Seite der Fahrzeugrahmen gegenüber der Zugstange verbunden sind; eine Querstange ist an einer Position nahe der Oberseite zwischen dem vorderen Ende und dem hinteren Ende des vorderen Trägers fest verbunden; eine erste Schaufel ist an einer linken mittleren Position der Querstange fest verbunden; ein Befestigungsblock ist an einer linken unteren mittleren Position des vorderen Trägers fest verbunden; eine Befestigungsstange ist drehbar in dem Befestigungsblock verbunden, und die Mitte der Befestigungsstange nahe der oberen Position ist gleitend mit dem ersten Becher verbunden; das obere Ende der Befestigungsstange durchdringt eine Gleitstange und ist gleitend mit dieser verbunden; das obere Ende der Gleitstange ist fest mit einem Handlauf verbunden; das obere Ende der Gleitstange ist fest mit einem Handlauf verbunden; der Außendurchmesser des oberen Endes der Befestigungsstange ist fest mit einem Verbindungsring verbunden; eine erste Verbindungsstange ist drehbar mit dem Verbindungsring verbunden; das innere vordere Ende der ersten Verbindungsstange durchdringt eine Verlängerungsstange und ist mit dieser verschiebbar verbunden; und das vordere Ende der ersten Verbindungsstange ist mit einer Sicherungsmutter versehen.

Aus der FR 3 085 938 A1 ist eine Hybride Transportvorrichtung bekannt, die wahlweise in einen von einem Straßenfahrzeug gezogenen Anhänger oder in ein Dreirad umgewandelt werden kann, wobei sie mindestens einen Anhänger, mindestens ein Fahrrad und mindestens ein Verbindungsmittel umfasst, das Verbindungsmittel die Verbindung zwischen dem Anhänger und dem Fahrrad sicherstellt und die Verbindung zwischen dem Anhänger und dem Straßenfahrzeug ermöglicht, wobei das Verbindungsmittel mindestens eine teleskopische Deichsel umfasst.

### Zusammenfassung der Erfindung

Es ist eine Aufgabe der Erfindung, ein modulares Lastenfahrzeug anzugeben, das flexibel einsetzbar ist und jeweils einen effizienten Transport unterschiedlicher Mengen oder Größen von Waren in unterschiedlichen Umgebungen ermöglicht.

Die Lösung der Aufgabe erfolgt durch ein modulares Lastenfahrzeug, zum Transport von Lasten durch einen Fahrer, mit den Merkmalen gemäß Anspruch 1.

Dabei umfasst das Lastenfahrzeug ein Zug-Fahrrad, wobei das Zug-Fahrrad eine vordere Achse mit einem vorderen Rad und eine hintere Achse mit einem oder zwei hinteren Rädern umfasst, wobei das Zug-Fahrrad einen Fahrersitz umfasst, wobei das Zug-Fahrrad vom Fahrer durch eine Tretkurbel antreibbar ist, wobei das Lastenfahrzeug ein Front-Lastenmodul umfasst, wobei das Front-Lastenmodul und das Zug-Fahrrad dazu ausgebildet sind, dass das hintere Ende des Front-Lastenmoduls an das vordere Ende des Zug-Fahrrads koppelbar ist, wobei das Front-Lastenmodul eine vordere Achse mit einem vorderen Rad und eine Lastenaufnahmefläche umfasst und keine hintere Achse umfasst, wobei das Lastenfahrzeug ein Anhänger-Lastenmodul umfasst, wobei das Anhänger-Lastenmodul und das Zug-Fahrrad dazu ausgebildet sind, dass das vordere Ende des Anhänger-Lastenmoduls an das hintere Ende des Zug-Fahrrads koppelbar ist, wobei das Anhänger-Lastenmodul eine, vorzugsweise mittlere, Achse mit zwei Rädern und eine Lastenaufnahmefläche umfasst.

Erfindungsgemäß wird ein Zug-Fahrrad zum Transport von Lasten verwendet, dass von einem Fahrer über eine Tretkurbel antreibbar ist, also ein durch eine einzige Person antreibbares Fahrrad. Das Fahrrad kann bevorzugt mit drei Rädern, also als Trike ausgebildet sein. An dieses Zug-Fahrrad kann sowohl hinten ein dazu ausgebildeter Anhänger als auch vorne ein dazu ausgebildetes Front-Lastenmodul, ohne eigene hintere Achse, angekoppelt werden. Sowohl das Front-Lastenmodul als auch das Anhänger-Lastenmodul dienen dem Transport von Lasten, insbesondere Waren und weisen daher Lastenaufnahmeflächen auf.

Erfindungsgemäß weist das Zug-Fahrrad einen Rollermodus auf, in dem eine Standfläche des Zug-Fahrrads benutzbar ist - so dass der Fahrer auf der Standfläche stehen kann und das Zug-Fahrrad durch Abstoßen von der Straße mit einem Fuß antreiben kann. Das Zug-Fahrrad weist erfindungsgemäß auch einen Fahrradmodus auf, in dem der Fahrer den Fahrersitz und die Tretkurbel benutzen kann, so dass das Zug-Fahrrad wie ein übliches Fahrrad vom Fahrer durch Treten der Pedale angetrieben werden kann. In einer Ausführung der Erfindung kann im Rollermodus der Fahrersitz und/oder die Tretkurbel in eine Nichtgebrauchsstellung gebracht sein, beispielsweise der Fahrersitz und/oder die Tretkurbel entfernt oder weggeklappt sein.

Im Rahmen dieser Schrift beziehen sich die Ausdrücke "Front", "vorne" und "hinten" auf die übliche Fahrtrichtung des Fahrzeuges. Ebenso bezieht sich der Ausdruck "lang" auf die Längserstreckung des Fahrzeuges, also die x-Richtung, die Erstreckung von vorne nach hinten, die üblicherweise auch der Fahrtrichtung des Fahrzeuges entspricht.

Weiterbildungen der Erfindung sind in den abhängigen Ansprüchen, der Beschreibung sowie den beigefügten Zeichnungen angegeben.

Vorzugsweise sind Zug-Fahrrad und Front-Lastenmodul so ausgebildet, dass das vordere Rad der vorderen Achse des Zug-Fahrrads keinen Bodenkontakt hat, wenn das Front-Lastenmodul an das Zug-Fahrrad gekoppelt ist. Die hintere Achse des Zug-Fahrrads ist dann durch die Tretkurbel antreibbar. Alternativ kann das oder die hinteren Räder der hinteren Achse des Zug-Fahrrads keinen Bodenkontakt haben, wenn das Anhänger-Lastenmodul an das Zug-Fahrrad gekoppelt ist. Die vordere Achse des Zug-Fahrrads ist dann durch die Tretkurbel antreibbar.

Bevorzugt weist das Zug-Fahrrad eine Antriebsbatterie und einen elektrischen Antriebsmotor auf und eine Achse des Zug-Fahrrads ist über den elektrischen Antriebsmotor antreibbar, vorzugsweise diejenige Achse des Zug-Fahrrads, die über die Tretkurbel antreibbar ist.

Bevorzugt weist das Front-Lastenmodul eine Antriebsbatterie und einen elektrischen Antriebsmotor auf und die vordere Achse des Front-Lastenmoduls ist über den elektrischen Antriebsmotor antreibbar.

Bevorzugt weist das Anhänger-Lastenmodul eine Antriebsbatterie und einen elektrischen Antriebsmotor auf und die Achse des Anhänger-Lastenmoduls ist über den elektrischen Antriebsmotor antreibbar.

Vorzugsweise ist das Front-Lastenmodul mindestens doppelt so lange wie das Zug-Fahrrad und/oder ist das Anhänger-Lastenmodul mindestens doppelt so lange ist wie das Zug-Fahrrad und/oder ist die Lastenaufnahmefläche des Front-Lastenmoduls mindestens so lang ist, wie das Zug-Fahrrad, besonders bevorzugt mindestens doppelt so lang, wie das Zug-Fahrrad. Das Zug-Fahrrad ist somit bevorzugt sehr kurz gebaut, bevorzugt höchstens 1,3 Meter oder höchstens 1 Meter von der Vorderachse zur Hinterachse, so dass es ohne Front-Lastenmodul und ohne Anhänger-Lastenmodul auch in engsten Räumen eingesetzt werden kann.

Vorzugsweise ist das Lastenfahrzeug dazu ausgebildet, in folgenden Modi betrieben zu werden: ein Zug-Fahrrad-Solo-Modus, ein Zug-Fahrrad-Solo-Roller-Modus, ein Zug-Fahrrad-Front-Lastenmodul-Modus, ein Zug-Fahrrad-Front-Lastenmodul-Roller-Modus, ein Zug-Fahrrad-Anhänger-Lastenmodul-Modus, ein Zug-Fahrrad-Anhänger-Lastenmodul-Roller-Modus, ein Zug-Fahrrad-Front-Lastenmodul-Anhänger-Lastenmodul-Modus und/oder ein Zug-Fahrrad-Front-Lastenmodul-Anhänger-Lastenmodul-Roller-Modus.

### Kurzbeschreibung der Zeichnungen

Die Erfindung wird im Folgenden beispielhaft unter Bezugnahme auf die Zeichnungen beschrieben.
- Fig. 1a, 1b: ist eine schematische Darstellung eines Zug-Fahrrads eines erfindungsgemäßen modularen Lastenfahrzeugs in einer ersten Ausführungsform in einem Betriebsmodus Zug-Fahrrad-Solo-Modus (1a) und Zug-Fahrrad-Solo-Roller-Modus (1b).
- Fig. 2a, 2b: ist eine schematische Darstellung eines Zug-Fahrrads eines erfindungsgemäßen modularen Lastenfahrzeugs in einer zweiten Ausführungsform in einem Betriebsmodus Zug-Fahrrad-Solo-Modus (2a) und Zug-Fahrrad-Solo-Roller-Modus (2b).
- Fig. 3a, 3b: ist eine schematische Darstellung eines Zug-Fahrrads und eines Front-Lastenmoduls eines erfindungsgemäßen modularen Lastenfahrzeugs in der ersten Ausführungsform in einem Betriebsmodus Zug-Fahrrad-Front-Lastenmodul-Modus (3a) und Zug-Fahrrad-Front-Lastenmodul-Roller-Modus (3b).
- Fig. 4a, 4b: ist eine schematische Darstellung eines Zug-Fahrrads und eines Front-Lastenmoduls eines erfindungsgemäßen modularen Lastenfahrzeugs in der zweiten Ausführungsform in einem Betriebsmodus Zug-Fahrrad-Front-Lastenmodul-Modus (4a) und Zug-Fahrrad-Front-Lastenmodul-Roller-Modus (4b).
- Fig. 5a, 5b: ist eine schematische Darstellung eines Zug-Fahrrads und eines Anhänger-Lastenmoduls eines erfindungsgemäßen modularen Lastenfahrzeugs in der ersten Ausführungsform in einem Betriebsmodus Zug-Fahrrad-Anhänger-Lastenmodul-Modus (5a) und Zug-Fahrrad-Anhänger-Lastenmodul-Roller-Modus (5b).
- Fig. 6a, 6b: ist eine schematische Darstellung eines Zug-Fahrrads und eines Anhänger-Lastenmoduls eines erfindungsgemäßen modularen Lastenfahrzeugs in der zweiten Ausführungsform in einem Betriebsmodus Zug-Fahrrad-Anhänger-Lastenmodul-Modus (6a) und Zug-Fahrrad-Anhänger-Lastenmodul-Roller-Modus (6b).
- Fig. 7a, 7b: ist eine schematische Darstellung eines erfindungsgemäßen modularen Lastenfahrzeugs in der ersten Ausführungsform in einem Betriebsmodus Zug-Fahrrad-Front-Lastenmodul-Anhänger-Lastenmodul-Modus (7a) und Zug-Fahrrad-Front-Lastenmodul-Anhänger-Lastenmodul-Roller-Modus (7b).
- Fig. 8a, 8b: ist eine schematische Darstellung eines erfindungsgemäßen modularen Lastenfahrzeugs in der zweiten Ausführungsform in einem Betriebsmodus Zug-Fahrrad-Front-Lastenmodul-Anhänger-Lastenmodul-Modus (8a) und Zug-Fahrrad-Front-Lastenmodul-Anhänger-Lastenmodul-Roller-Modus (8b).
- Fig. 9: ist eine schematische Darstellung möglicher Positionen von Antriebsbatterien in einem erfindungsgemäßen modularen Lastenfahrzeug in der ersten Ausführungsform im Zug-Fahrrad-Front-Lastenmodul-Anhänger-Lastenmodul-Modus.

### Detaillierte Beschreibung der Erfindung

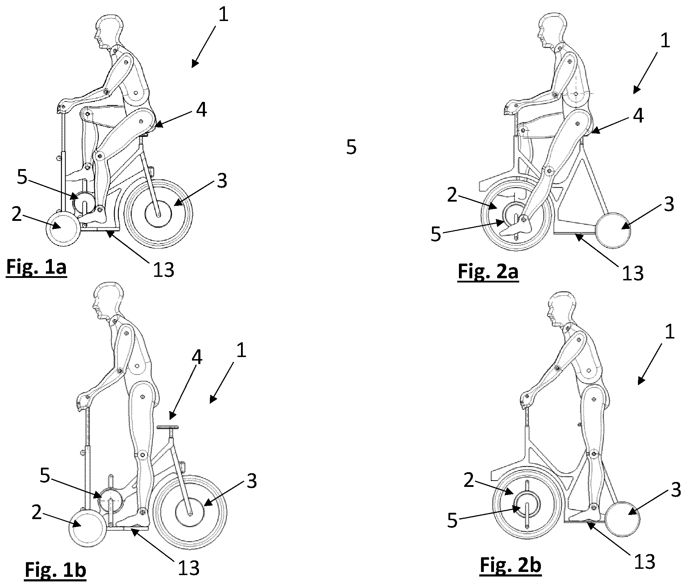

Fig. 1 ist eine schematische Darstellung eines Zug-Fahrrads 1 eines erfindungsgemäßen modularen Lastenfahrzeugs in einer ersten Ausführungsform, wobei nämlich die hintere Achse und somit das hintere Rad 3 oder die hinteren beiden Räder 3 des Zug-Fahrrads 1 angetrieben sind, in dem Betriebsmodus Zug-Fahrrad-Solo-Modus (Fig. 1a) und Zug-Fahrrad-Solo-Roller-Modus (Fig. 1b). Das selbe Zug-Fahrrad 1 ist somit in Fig. 1a als Fahrrad betrieben - nämlich sitzend auf einem Fahrersitz 4 und eine Tretkurbel 5 tretend - und in Fig. 1b als Roller bzw. Scooter betrieben - nämlich auf einer Standfläche 13 stehend und mit einem Fuß auf der Fahrbahn abstoßend. Vorzugsweise weist die hintere Achse zwei Räder 3 auf und das Zug-Fahrrad 1 ist somit ein Trike. Das Zug-Fahrrad 1 umfasst eine vordere Achse mit einem vorderen Rad 2 und eine hintere Achse mit einem oder wie erwähnt mit zwei hinteren Rädern 3.

Wie in Fig. 2a und 2b dargestellt, kann die Tretkurbel 5 des Zug-Fahrrads 1 dazu eingerichtet sein, statt die hintere Achse des Zug-Fahrrads 1 anzutreiben (Fig. 1a und 1b), die vordere Achse des Zug-Fahrrads 1 anzutreiben. Die Tretkurbel 5 kann dazu bevorzugt direkt an der vorderen Achse angeordnet sein.

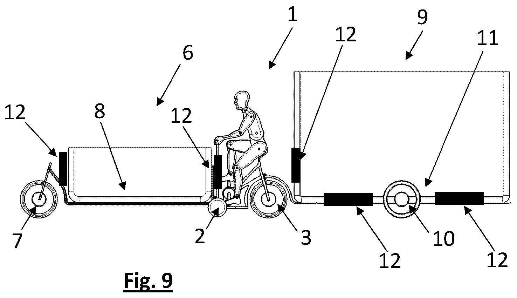

Zusätzlich zu einem manuellen Antrieb des Zug-Fahrrads 1 über die Tretkurbel 5 durch den Fahrer, kann das Zug-Fahrrad 1 eine Antriebsbatterie 12 und einen Antriebsmotor aufweisen (siehe Fig. 9).

Beispielsweise kann das Zug-Fahrrad für einen schnellen Transport kleinerer Mengen von Gütern auf kurzen und/oder engen Strecken verwendet werden. Das Zug-Fahrrad 1 kann ein selbstfahrendes Fahrzeug (Traktor) sein, beispielsweise für die Auslieferung von Kleingütern. Das ZugFahrzeug 1 kann auch zur Personenbeförderung dienen.

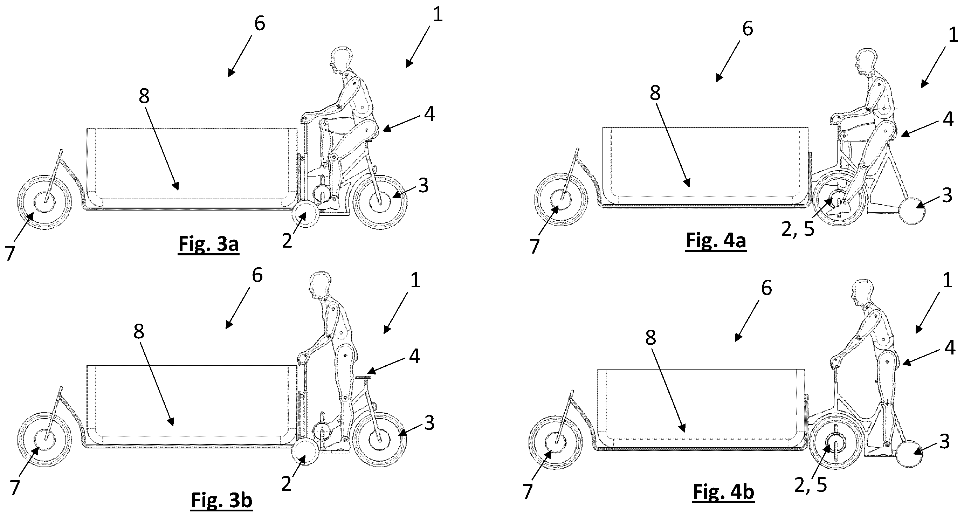

Fig. 3 ist eine schematische Darstellung eines Zug-Fahrrads 1 und eines Front-Lastenmoduls 6 eines erfindungsgemäßen modularen Lastenfahrzeugs in einem Betriebsmodus Zug-Fahrrad-Front-Lastenmodul-Modus (Fig. 3a) und Zug-Fahrrad-Front-Lastenmodul-Roller-Modus (Fig. 3b).

Das Lastenfahrzeug umfasst dabei ein Front-Lastenmodul 6, wobei das Front-Lastenmodul 6 und das Zug-Fahrrad 1 dazu ausgebildet sind, dass das hintere Ende des Front-Lastenmoduls 6 an das vordere Ende des Zug-Fahrrads 1 koppelbar ist.

Das Front-Lastenmodul 6 umfasst eine vordere Achse mit einem vorderen Rad 7 und eine Lastenaufnahmefläche 8. Die Lastenaufnahmefläche 8 kann Seitenwände aufweisen und im Wesentlichen einen oben offenen oder schließbaren Behälter bilden. Das Front-Lastenmodul 6 umfasst keine hintere Achse.

Das vordere Rad 2 der vorderen Achse des Zug-Fahrrads 1 kann dazu eingerichtet sein, keinen Bodenkontakt zu haben, wenn das Front-Lastenmodul 6 an das Zug-Fahrrad 1 gekoppelt ist. Die hintere Achse des Zug-Fahrrads 1 ist dann durch die Tretkurbel 5 und/oder durch einen Antriebsmotor antreibbar.

Das Front-Lastenmodul 6 kann eine Antriebsbatterie 12 und einen elektrischen Antriebsmotor aufweisen und die vordere Achse des Front-Lastenmoduls 6 kann über den elektrischen Antriebsmotor antreibbar sein.

Durch die Möglichkeit ein Front-Lastenmoduls 6 an- und abzukoppeln, kann das Lastenfahrrad beispielsweise einen Zeitvorteil bieten: Während ein Fahrer eines üblichen Lastenfahrrads zum Beladen steht kann beispielsweise ein schon beladenes Vorderteil an ein Zug-Fahrrad 1 angedockt werden, um die Waren sofort zu transportieren. Auch können Akku-Ladezeiten durch das Andocken eines Front-Lastenmoduls 6 mit bereits geladener Antriebsbatterie 12 verkürzt werden.

Fig. 4 ist eine Variante des modularen Lastenfahrzeugs gemäß Fig. 3, wobei jedoch das vordere Rad des Zug-Fahrrads 1 angetrieben ist - wie in Fig. 2a und 2b.

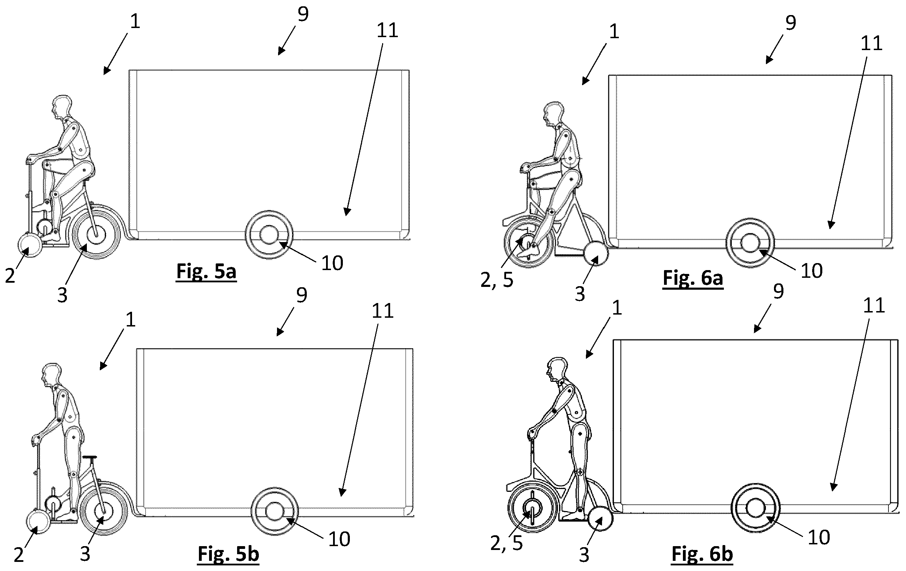

Fig. 5 ist eine schematische Darstellung eines Zug-Fahrrads 1 und eines Anhänger-Lastenmoduls 9 eines modularen Lastenfahrzeugs in einem Betriebsmodus Zug-Fahrrad-Anhänger-Lastenmodul-Modus (Fig. 5a) und Zug-Fahrrad-Anhänger-Lastenmodul-Roller-Modus (Fig. 5b).

Das Lastenfahrzeug umfasst ein Anhänger-Lastenmodul 9, wobei das Anhänger-Lastenmodul 9 und das Zug-Fahrrad 1 dazu ausgebildet sind, dass das vordere Ende des Anhänger-Lastenmoduls 9 an das hintere Ende des Zug-Fahrrads 1 koppelbar ist. Das Anhänger-Lastenmodul 9 umfasst eine, vorzugsweise axial etwa mittige, Achse mit zwei Rädern 10 und eine Lastenaufnahmefläche 11. Die Lastenaufnahmefläche 11 kann Seitenwände aufweisen und im Wesentlichen einen oben offenen oder schließbaren Behälter bilden.

Das Anhänger-Lastenmodul 9 kann eine Antriebsbatterie 12, bevorzugt mehrere Antriebsbatterien 12, und einen elektrischen Antriebsmotor aufweisen und die Achse des Anhänger-Lastenmoduls 9 kann über den elektrischen Antriebsmotor antreibbar sein.

In diesem Betriebsmodus - mit Anhänger-Lastenmodul 9 - können größere Mengen an Gütern transportiert werden. Das Fahrzeug bleibt dabei hoch mobil.

In der Ausführung nach Fig. 6a und 6b ist wider die vordere Achse des Zug-Fahrrads 1 direkt angetrieben. Wieder benutzt der Fahrer das selbe Zug-Fahrrad in der oberen Figur (Fig. 5a und 5b) sitzend, also im Fahrradmodus, und in der unteren Figur (Fig. 5b und 6b) stehend, also im Rollermodus.

Wie in Fig. 6a und 6b dargestellt, kann das oder die hinteren Räder 3 der hinteren Achse des Zug-Fahrrads 1 so ausgebildet sein, dass diese keinen Bodenkontakt haben, wenn das Anhänger-Lastenmodul 9 an das Zug-Fahrrad ) gekoppelt ist und die vordere Achse des Zug-Fahrrads 1 durch die Tretkurbel 5 antreibbar ist.

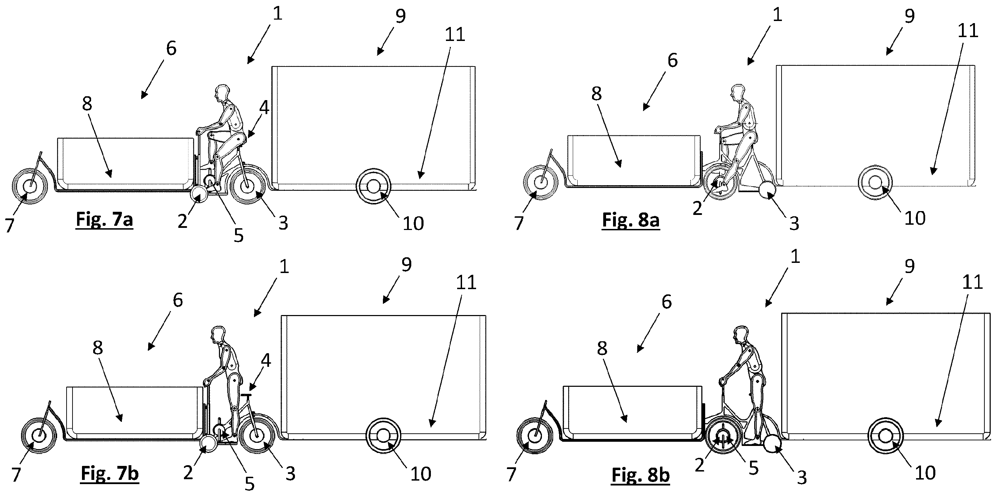

Fig. 7 ist eine schematische Darstellung eines gesamten modularen Lastenfahrzeugs in einem Betriebsmodus Zug-Fahrrad-Front-Lastenmodul-Anhänger-Lastenmodul-Modus (Fig. 7a) und Zug-Fahrrad-Front-Lastenmodul-Anhänger-Lastenmodul-Roller-Modus (Fig. 7b).

Das Lastenfahrzeug umfasst somit ein Zug-Fahrrad 1, ein Front-Lastenmodul 6 und ein Anhänger-Lastenmodul 9.

In diesem Zustand des Lastenfahrzeugs können größere Mengen an Gütern transportiert werden.

Eine Antriebsbatterie 12 kann im vorderen Teil des Fahrrads, insbesondere in der Mitte, platziert sein, um die Unabhängigkeit der einzelnen Komponenten zu erreichen (siehe Fig. 9). Bei dieser vollständigen Konfiguration haben die kleinen Räder des Zug-Fahrrads 1 bevorzugt keine Verbindung zum Boden.

Fig. 8 zeigt wieder ein ebenso vollständiges Fahrzeug wie Fig. 7, wobei lediglich die Vorderachse des Zug-Fahrrads 1 angetrieben wird, anstatt der Hinterachse.

Das Front-Lastenmodul 6 kann mindestens doppelt so lange sein wie das Zug-Fahrrad 1. Das Anhänger-Lastenmodul 9 kann mindestens doppelt so lange sein, wie das Zug-Fahrrad 1. Die Lastenaufnahmefläche 8 des Front-Lastenmoduls 6 kann länger als das Zug-Fahrrad 1 sein, bevorzugt etwa doppelt so lang.

Ein solches modulares Lastenfahrzeug kann somit in den in den Fig. 1 bis 8 dargestellten Modi betrieben werden: ein Zug-Fahrrad-Solo-Modus, ein Zug-Fahrrad-Solo-Roller-Modus, ein Zug-Fahrrad-Front-Lastenmodul-Modus, ein Zug-Fahrrad-Front-Lastenmodul-Roller-Modus, ein Zug-Fahrrad-Anhänger-Lastenmodul-Modus, ein Zug-Fahrrad-Anhänger-Lastenmodul-Roller-Modus, ein Zug-Fahrrad-Front-Lastenmodul-Anhänger-Lastenmodul-Modus und/oder ein Zug-Fahrrad-Front-Lastenmodul-Anhänger-Lastenmodul-Roller-Modus.

Fig. 9 ist eine schematische Darstellung möglicher Positionen von Antriebsbatterien 12 in einem erfindungsgemäßen modularen Lastenfahrzeug in der ersten Ausführungsform im Zug-Fahrrad-Front-Lastenmodul-Anhänger-Lastenmodul-Modus. Es kann beispielsweise eine Antriebsbatterie 12 im Front-Lastenmodul 6 angeordnet sein, insbesondere im Bereich des vorderen Endes des Front-Lastenmoduls 6. Eine weitere Antriebsbatterie 12 kann im Zug-Fahrrad 1 angeordnet sein, insbesondere im Bereich des vorderen Endes des Zug-Fahrrads 1. Im Anhänger-Lastenmodul 9 können ein oder mehrere Antriebsbatterien 12 verbaut sein, beispielsweise an der Lastenaufnahmefläche 11, vor und/oder hinter der axial mittigen Achse.

Das Lastenfahrrad kann somit drei Hauptkomponenten aufweisen:
- Einspuriger Frontträger (Front-Lastenmodul 6). Für die Hochlastoption kann das Vorderrad mit einem Nabenmotor ausgestattet werden und kann eine Batterie integriert sein.
- Zugmaschine (Zug-Fahrrads 1), bevorzugt als Trike in V- oder A-Anordnung - eine Achse ist elektrisch angetrieben und das Trike kann mit einer kleinen Batterie ausgestattet sein, um im Stand-Alone-Modus betrieben zu werden.
- Anhänger (Anhänger-Lastenmodul 9): mit oder ohne angetriebene Nabenmotoren und einer Batterie.

### Bezugszeichenliste

- 1: Zug-Fahrrad
- 2: vorderes Rad des Zug-Fahrrads
- 3: hinteres Rad des Zug-Fahrrads
- 4: Fahrersitz
- 5: Tretkurbel
- 6: Front-Lastenmodul
- 7: vorderes Rad des Front-Lastenmoduls
- 8: Lastenaufnahmefläche des Front-Lastenmoduls
- 9: Anhänger-Lastenmodul
- 10: Räder des Anhänger-Lastenmoduls
- 11: Lastenaufnahmefläche des Anhänger-Lastenmoduls
- 12: Antriebsbatterie
- 13: Standfläche

## Patentansprüche

1. Modulares Lastenfahrzeug, zum Transport von Lasten durch einen Fahrer, wobei das Lastenfahrzeug ein Zug-Fahrrad (1) umfasst, wobei das Zug-Fahrrad (1) eine vordere Achse mit einem vorderen Rad (2) und eine hintere Achse mit einem oder zwei hinteren Rädern (3) umfasst, wobei das Zug-Fahrrad (1) einen Fahrersitz (4) umfasst, wobei das Zug-Fahrrad (1) vom Fahrer durch eine Tretkurbel (5) antreibbar ist, wobei das Lastenfahrzeug ein Front-Lastenmodul (6) umfasst, wobei das Front-Lastenmodul (6) und das Zug-Fahrrad (1) dazu ausgebildet sind, dass das hintere Ende des Front-Lastenmoduls (6) an das vordere Ende des Zug-Fahrrads (1) koppelbar ist, wobei das Front-Lastenmodul (6) eine vordere Achse mit einem vorderen Rad (7) und eine Lastenaufnahmefläche (8) umfasst und keine hintere Achse umfasst, **dadurch ge**- **kennzeichnet**, dass das Lastenfahrzeug ein Anhänger-Lastenmodul (9) umfasst, wobei das Anhänger-Lastenmodul (9) und das Zug-Fahrrad (1) dazu ausgebildet sind, dass das vordere Ende des Anhänger-Lastenmoduls (9) an das hintere Ende des Zug-Fahrrads (1) koppelbar ist, wobei das Anhänger-Lastenmodul (9) eine, vorzugsweise axial mittige, Achse mit zwei Rädern (10) und eine Lastenaufnahmefläche (11) umfasst, wobei das Zug-Fahrrad (1) einen Rollermodus aufweist, in dem eine Standfläche (13) des Zug-Fahrrads (1) benutzbar ist, und einen Fahrradmodus aufweist, in dem der Fahrersitz (4) und die Tretkurbel (5) benutzbar sind.

2. Modulares Lastenfahrzeug nach Anspruch 1,
**dadurch gekennzeichnet, dass** das vordere Rad (2) der vorderen Achse des Zug-Fahrrads (1) keinen Bodenkontakt hat wenn das Front-Lastenmodul (6) an das Zug-Fahrrad (1) gekoppelt ist und die hintere Achse des Zug-Fahrrads (1) durch die Tretkurbel (5) antreibbar ist und/oder dass das oder die hinteren Räder (3) der hinteren Achse des Zug-Fahrrads (1) keinen Bodenkontakt haben wenn das Anhänger-Lastenmodul (9) an das Zug-Fahrrad (1) gekoppelt ist und die vordere Achse des Zug-Fahrrads (1) durch die Tretkurbel (5) antreibbar ist.

3. Modulares Lastenfahrzeug nach zumindest einem der vorhergehenden Ansprüche,
**dadurch gekennzeichnet, dass** das Zug-Fahrrad (1) eine Antriebsbatterie (12) und einen elektrischen Antriebsmotor aufweist und eine Achse des Zug-Fahrrads (1) über den elektrischen Antriebsmotor antreibbar ist, vorzugsweise diejenige Achse des Zug-Fahrrads (1), die über die Tretkurbel (5) antreibbar ist.

4. Modulares Lastenfahrzeug nach zumindest einem der vorhergehenden Ansprüche,
**dadurch gekennzeichnet, dass** das Front-Lastenmodul (6) eine Antriebsbatterie (12) und einen elektrischen Antriebsmotor aufweist und die vordere Achse des Front-Lastenmoduls (6) über den elektrischen Antriebsmotor antreibbar ist und/oder dass das Anhänger-Lastenmodul (9) eine Antriebsbatterie (12) und einen elektrischen Antriebsmotor aufweist und die Achse des Anhänger-Lastenmoduls (9) über den elektrischen Antriebsmotor antreibbar ist.

5. Modulares Lastenfahrzeug nach zumindest einem der vorhergehenden Ansprüche,
**dadurch gekennzeichnet, dass** das Front-Lastenmodul (6) mindestens doppelt so lange ist wie das Zug-Fahrrad (1) und/oder dass das Anhänger-Lastenmodul (9) mindestens doppelt so lange ist wie das Zug-Fahrrad (1) und/oder dass die Lastenaufnahmefläche (8) des Front-Lastenmoduls (6) mindestens so lang ist, wie das Zug-Fahrrad (1), bevorzugt mindestens doppelt so lang ist, wie das Zug-Fahrrad (1).

6. Modulares Lastenfahrzeug nach zumindest einem der vorhergehenden Ansprüche,
**dadurch gekennzeichnet, dass** das Lastenfahrzeug dazu ausgebildet ist, in folgenden Modi betrieben zu werden: ein Zug-Fahrrad-Solo-Modus, ein Zug-Fahrrad-Solo-Roller-Modus, ein Zug-Fahrrad-Front-Lastenmodul-Modus, ein Zug-Fahrrad-Front-Lastenmodul-Roller-Modus, ein Zug-Fahrrad-Anhänger-Lastenmodul-Modus, ein Zug-Fahrrad-Anhänger-Lastenmodul-Roller-Modus, ein Zug-Fahrrad-Front-Lastenmodul-Anhänger-Lastenmodul-Modus und/oder ein Zug-Fahrrad-Front-Lastenmodul-Anhänger-Lastenmodul-Roller-Modus.

## Claims

1. Modular cargo vehicle, for the transportation of cargo by a rider, wherein the cargo vehicle comprises a tow cycle (1), wherein the tow cycle (1) comprises a front axle with a front wheel (2) and a rear axle with one or two rear wheels (3), wherein the tow cycle (1) comprises a rider seat (4), wherein the tow cycle (1) can be driven by the rider by way of a pedal crank (5), wherein the cargo vehicle comprises a front cargo module (6), wherein the front cargo module (6) and the tow cycle (1) are designed such that the rear end of the front cargo module (6) can be coupled to the front end of the tow cycle (1), wherein the front cargo module (6) comprises a front axle with a front wheel (7) and comprises a cargo-receiving area (8) and does not comprise a rear axle, **characterized in that** the cargo vehicle comprises a trailer cargo module (9), wherein the trailer cargo module (9) and the tow cycle (1) are designed such that the front end of the trailer cargo module (9) can be coupled to the rear end of the tow cycle (1), wherein the trailer cargo module (9) comprises a, preferably axially central, axle with two wheels (10) and comprises a cargo-receiving area (11) wherein the tow cycle (1) has a scooter mode, in which a standing surface (13) of the tow cycle (1) can be used, and a cycle mode, in which the rider seat (4) and the pedal crank (5) can be used.

2. Modular cargo vehicle according to Claim 1,
**characterized in that** the front wheel (2) of the front axle of the tow cycle (1) is not in contact with the ground when the front cargo module (6) is coupled to the tow cycle (1) and the rear axle of the tow cycle (1) can be driven by way of the pedal crank (5) and/or **in that** the rear wheel or rear wheels (3) of the rear axle of the tow cycle (1) are not in contact with the ground when the trailer cargo module (9) is coupled to the tow cycle (1) and the front axle of the tow cycle (1) can be driven by way of the pedal crank (5).

3. Modular cargo vehicle according to at least one of the preceding claims,
**characterized in that** the tow cycle (1) has a drive battery (12) and an electric drive motor and one axle of the tow cycle (1) can be driven by means of the electric drive motor, preferably that axle of the tow cycle (1) which can be driven by means of the pedal crank (5).

4. Modular cargo vehicle according to at least one of the preceding claims,
**characterized in that** the front cargo module (6) has a drive battery (12) and an electric drive motor and the front axle of the front cargo module (6) can be driven by means of the electric motor and/or **in that** the trailer cargo module (9) has a drive battery (12) and an electric drive motor and the axle of the trailer cargo module (9) can be driven by means of the electric drive motor.

5. Modular cargo vehicle according to at least one of the preceding claims,
**characterized in that** the front cargo module (6) is at least twice as long as the tow cycle (1) and/or **in that** the trailer cargo module (9) is at least twice as long as the tow cycle (1) and/or **in that** the cargo -receiving area (8) of the front cargo module (6) is at least as long as the tow cycle (1), preferably at least twice as long as the tow cycle (1).

6. Modular cargo vehicle according to at least one of the preceding claims,
**characterized in that** the cargo vehicle is designed to be operated in the following modes: a tow cycle solo mode, a tow cycle solo scooter mode, a tow cycle front cargo module mode, a tow cycle front cargo module scooter mode, a tow cycle trailer cargo module mode, a tow cycle trailer cargo module scooter mode, a tow cycle front cargo module and trailer cargo module mode and/or a tow cycle front cargo module and trailer cargo module scooter mode.

## Revendications

1. Véhicule de manutention modulaire pour le transport de charges par un conducteur, le véhicule de manutention comprenant une bicyclette de traction (1), la bicyclette de traction (1) comprenant un essieu avant avec une roue avant (2) et un essieu arrière avec une ou deux roues arrière (3), la bicyclette de traction (1) comprenant un siège (4) de conducteur, la bicyclette de traction (1) pouvant être entraînée par une manivelle de pédalier (5) par le conducteur, le véhicule de manutention comprenant un module de manutention avant (6), le module de manutention avant (6) et la bicyclette de traction (1) étant réalisés pour que l'extrémité arrière du module de manutention avant (6) puisse être couplée à l'extrémité avant de la bicyclette de traction (1), le module de manutention avant (6) comprenant un essieu avant avec une roue avant (7) et une surface de réception de charges (8) et ne comprenant aucun essieu arrière, **caractérisé en ce que** le véhicule de manutention comprend un module de manutention de remorque (9), le module de manutention de remorque (9) et la bicyclette de traction (1) étant réalisés pour que l'extrémité avant du module de manutention de remorque (9) puisse être couplée à l'extrémité arrière de la bicyclette de traction (1), le module de manutention de remorque (9) comprenant un essieu, de préférence axialement central, avec deux roues (10) et une surface de réception de charges (11), la bicyclette de traction (1) comportant un mode trottinette, dans lequel une surface de support (13) de la bicyclette de traction (1) peut être utilisée, et un mode bicyclette, dans lequel le siège (4) de conducteur et la manivelle de pédalier (5) peuvent être utilisés.

2. Véhicule de manutention modulaire selon la revendication 1,
**caractérisé en ce que** la roue avant (2) de l'essieu avant de la bicyclette de traction (1) ne présente aucun contact avec le sol lorsque le module de manutention avant (6) est couplé à la bicyclette de traction (1) et l'essieu arrière de la bicyclette de traction (1) peut être entraîné par la manivelle de pédalier (5), et/ou **en ce que** la ou les roues arrière (3) de l'essieu arrière de la bicyclette de traction (1) ne présentent aucun contact avec le sol lorsque le module de manutention de remorque (9) est couplé à la bicyclette de traction (1) et l'essieu avant de la bicyclette de traction (1) peut être entraîné par la manivelle de pédalier (5).

3. Véhicule de manutention modulaire selon au moins l'une des revendications précédentes,
**caractérisé en ce que** la bicyclette de traction (1) comporte une batterie d'entraînement (12) et un moteur d'entraînement électrique et un essieu de la bicyclette de traction (1) peut être entraîné par le moteur d'entraînement électrique, de préférence cet essieu de la bicyclette de traction (1), qui peut être entraîné par la manivelle de pédalier (5).

4. Véhicule de manutention modulaire selon au moins l'une des revendications précédentes,
**caractérisé en ce que** le module de manutention avant (6) comporte une batterie d'entraînement (12) et un moteur d'entraînement électrique et l'essieu avant du module de manutention avant (6) peut être entraîné par le moteur d'entraînement électrique, et/ou **en ce que** le module de manutention de remorque (9) comporte une batterie d'entraînement (12) et un moteur d'entraînement électrique et l'essieu du module de manutention de remorque (9) peut être entraîné par le moteur d'entraînement électrique.

5. Véhicule de manutention modulaire selon au moins l'une des revendications précédentes,
**caractérisé en ce que** le module de manutention avant (6) est au moins deux fois plus long que la bicyclette de traction (1), et/ou **en ce que** le module de manutention de remorque (9) est au moins deux fois plus long que la bicyclette de traction (1), et/ou **en ce que** la surface de réception de charges (8) du module de manutention avant (6) est au moins aussi longue que la bicyclette de traction (1), de manière préférée est deux fois plus longue que la bicyclette de traction (1).

6. Véhicule de manutention modulaire selon au moins l'une des revendications précédentes,
**caractérisé en ce que** le véhicule de manutention est réalisé pour fonctionner dans des modes suivants : un mode solo de bicyclette de traction, un mode trottinette solo de bicyclette de traction, un mode module de manutention avant de bicyclette de traction, un mode trottinette de module de manutention avant de bicyclette de traction, un mode module de manutention de remorque de bicyclette de traction, un mode trottinette de module de manutention de remorque de bicyclette de traction, un mode module de manutention de remorque de module de manutention avant de bicyclette de traction, et/ou un mode trottinette de module de manutention de remorque de module de manutention avant de bicyclette de traction.
